# EUROPEAN PATENT SPECIFICATION

(11) **EP 3 243 695 B1**
(45) Date of publication and mention of the grant of the patent: **13.03.2019**
(21) Application number: 16168981.5
(22) Date of filing: 10.05.2016
(51) Int. Cl.: B60N 2/12, B60N 2/20, B60N 2/22, B60N 2/30

(54) **VEHICLE SEAT**
FAHRZEUGSITZ
SIÈGE DE VÉHICULE

(43) Date of publication of application: 15.11.2017
(73) Proprietor: Adient Luxembourg Holding S.à r.l., 1855 Luxembourg (LU)
(72) Inventor: DESHPANDE, Umesh A., 411041 Pune (IN); GOUDAR, Girish, 590006 Belgaum (IN); WHARTON, James, 411001 Pune, Maharashtra (IN)
(74) Representative: Liedhegener, Ralf

(56) References cited:
- EP-A1- 2 537 703
- WO-A1-2008/019033
- DE-A1-102004 030 320
- DE-A1-102004 051 873

## Description

The invention relates to a vehicle seat, in particular a motor vehicle seat, having a seat member and a backrest which can be pivoted about a pivot axis, and at least one lockable fitting for pivotably connecting the backrest to the seat member, the vehicle seat further having at least one rail pair for longitudinally adjusting the vehicle seat and a rail lock for locking the at least one rail pair. The vehicle seat can be moved into an easy-entry position which can be assumed for easier accessibility to a rear seat row and in which the vehicle seat with respect to at least one position for use which is suitable for transporting persons is displaced into a front longitudinal position by means of the at least one rail pair. The backrest is pivoted forwards about the pivot axis and the backrest can be secured in the pivoted-forward position by means of a detent.

### Prior Art

In the prior art, there are known different easy-entry systems for vehicle seats, which enable facilitated entry into a rear seat row of a vehicle. The easy-entry system can be actuated by means of an unlocking lever which is conventionally arranged on a backrest of the vehicle seat, whereby the backrest of the vehicle seat pivots out of an entry region.

If the vehicle seat is further arranged on rails, the vehicle seat may additionally or alternatively be displaceable in the travel direction out of the entry region when the unlocking lever is actuated. In this instance, there is generally provision for a locking device of the seat rail pair to be unlocked by means of a Bowden cable which is actuated by the pivot movement of the backrest by the backrest of the vehicle seat being pivoted forwards. Furthermore, the vehicle seat may have a loading floor function and/or a so-called flat floor function. These functions can generally be actuated by means of a separate actuation lever, which may also be arranged, for example, in a position remote from the vehicle seat, in particular in the luggage compartment of the vehicle.

In known vehicle seats with such a flat floor function, which serves to increase the loading floor, the vehicle seat can be moved into a flat floor position. Such systems for moving the vehicle seat into the flat floor position, in addition to an actuation member which is arranged on the vehicle seat, can also preferably be actuated by means of a remote actuation member from a region of the loading floor remote from the vehicle seat. In known systems, however, an actuation of the remote actuation member in a manner known per se leads only to a pivoting of the backrest as far as the easy-entry position, wherein additional folding forward is not carried out even after repeated actuation of the remote actuation member as a result of the counteraction of the Bowden cable acting on the backrest. In addition, the rails of the vehicle seat are also generally unlocked in this instance.

DE 10 2013 215 028 A1 discloses an easy-entry system for a vehicle seat comprising the features according to the preamble of claim 1. The at least one fitting component is coupled to a transmission element and an unlocking lever of the easy-entry system is at least indirectly connected to the transmission element. A comfort lever of a backrest is in engagement with the carrier profile and a pivot region of the backrest is limited with an actuated easy-entry function by means of a locking detent which engages in the at least one fitting. An engagement of the locking detent in the at least one fitting can be cancelled by actuating the comfort lever for adjusting a position of the backrest.

### Problem

An object of the invention is to improve a vehicle seat of the type mentioned in the introduction, in particular to carry out a function separation in order to move the vehicle seat from a position for use into the easy-entry position and to move the vehicle seat from a position for use into the flat floor position.

### Solution

This object is achieved according to the invention by a vehicle seat comprising the features of claim 1, in particular a motor vehicle seat, having a seat member and a backrest which can be pivoted about a pivot axis and at least one lockable fitting for pivotably connecting the backrest to the seat member, the vehicle seat further having at least one rail pair for longitudinally adjusting the vehicle seat and a rail lock for locking the at least one rail pair. The vehicle seat can be moved into an easy-entry position which can be assumed for easier accessibility to a rear seat row and in which the vehicle seat with respect to at least one position for use which is suitable for transporting persons is displaced into a front longitudinal position by means of the at least one rail pair. The backrest is pivoted forwards about the pivot axis and the backrest is secured in the pivoted-forward position by means of a detent.

As a result of the fact that the detent can be blocked by means of a blocking lever in order to prevent release of the backrest as long as the vehicle seat is displaced into a longitudinal position which corresponds to the easy-entry position, the advantage is afforded that raising or pivoting backwards of the backrest is prevented as long as the vehicle seat is not moved out of the easy-entry position back into a region of longitudinal positions in order to assume positions for use.

Advantageous embodiments, which can be used individually or in combination with each other, are set out in the dependent claims.

The detent may be resiliently loaded. The detent is preferably acted on by means of a resilient element with a resilient force. The detent may in particular be resiliently loaded in the direction of a securing position.

The vehicle seat may further have a control ring which, when the backrest is moved into the easy-entry position, can also be carried by means of a carrier which is arranged on the backrest. The control ring may, for the purposes of engagement of the carrier, preferably have a fork-like portion or fork-like continuation. The control ring may alternatively have a stop edge for contacting the carrier.

The control ring may in particular move into engagement with the detent when the backrest is pivoted into the easy-entry position.

The control ring may preferably be rotatably arranged coaxially relative to the pivot axis of the backrest. The control ring may further preferably be arranged in alignment with the pivot axis of the backrest at an outer side of a backrest frame.

There may further be provision for the carrier to be arranged so as to be rotatably supported on a lateral portion of the backrest. Furthermore, the carrier may be resiliently loaded in the direction of a position which can be brought into engagement with the control ring, in particular by means of a resilient element which is provided for this purpose. The carrier may, for example, have an arm portion on which a pin is arranged. The pin on the arm portion of the carrier may be brought into engagement or out of engagement with the control ring when the carrier is pivoted.

The carrier, in order to assume the flat-floor position, may further be able to be moved by actuation of a handle for remote unlocking into a position in which the carrier is out of engagement with the control ring and the control ring, when the backrest is pivoted forward, maintains its angular position relative to the pivot axis. The rail lock thereby remains locked. The carrier may to this end have an additional arm portion on which a Bowden cable which is connected to the handle for remote unlocking can engage. The carrier can be operationally connected to the handle for remote unlocking by means of a Bowden cable.

The control ring may have a receiving member by means of which the control ring and the carrier can be brought into engagement with each other. The control ring may have a groove-like or fork-like receiving member in which a cooperating pin of the carrier engages. The pin may be arranged so as to protrude laterally on the carrier. The control ring may further be able to be connected to a first end of a first Bowden cable whose second end cooperates with a rail lock. The control ring may have an additional receiving member in which the first end of the first Bowden cable can be received. The rail lock may in particular be able to be unlocked by means of actuation by the first Bowden cable. A rotation of the control ring, in particular a rotation in the direction of the pivot movement of the backrest, preferably in the direction of a forward pivoting of the backrest, may preferably bring about an unlocking of the rail lock.

The vehicle seat may further have an activation element which is configured in such a manner that a pivoting of the blocking lever into a blocking position in which the detent is blocked is carried out when the activation element moves into contact with a control contour which is arranged in the region of a longitudinal position which corresponds to the easy-entry position. The activation element may preferably be operationally connected to the blocking lever by a second Bowden cable. The activation element may be configured in such a manner that, when the vehicle seat is pushed forward, it can be pivoted by the control contour and, in a state in abutment with the control contour, can be guided along the control contour.

The control ring may be pretensioned in the direction of a basic position by means of a resilient element. The basic position of the control ring is assumed when the backrest is raised. Furthermore, there may be provided an end stop which prevents over-rotation of the control ring from the position with the backrest pivoted forward beyond the basic position.

The blocking lever may be pretensioned in the direction of a release position by means of a resilient element. The release position of the blocking lever is assumed when the blocking lever is pivoted into a position remote from the detent, in particular when the detent can be pivoted in the direction of the blocking lever. The activation element can be pretensioned by means of a resilient element.

The features which have been disclosed in the above description, the claims and the drawings may be significant both individually and in combination to the implementation of the invention in its various embodiments.

### Figures and embodiments of the invention

Before embodiments of the invention are described more extensively below with reference to the drawings, it should first be emphasised that the invention is not limited to the described components or the described method steps. Furthermore, the terminology used also does not constitute a limitation, but instead is only of exemplary nature. Where the singular is used below in the description and the claims, the plural is also included in each case, as long as the context does not explicitly exclude this.

The invention is explained in greater detail below with reference to an advantageous embodiment which is illustrated in the Figures. However, the invention is not limited to this embodiment. In the drawings:
- Fig. 1:: is a partial side view of a vehicle seat according to the invention,
- Fig. 2a:: is a partial side view of a mounted control ring,
- Fig. 2b:: is an exploded view of various components of Figure 2a,
- Fig. 3a:: is a perspective partial view of a mounted activation element,
- Fig. 3b:: is an exploded view of various components of Figure 3a,
- Fig. 4a:: is a partial side view of a mounted blocking lever,
- Fig. 4b:: is an exploded view of various components from Figure 4a,
- Fig. 5a:: is a partial side view of the vehicle seat according to the invention with the backrest pivoted forwards,
- Fig. 5b:: is a side view of the vehicle seat from Figure 5a in the easy-entry position,
- Fig. 6:: is a side view of the activation element in the activated state,
- Fig. 7:: is a partial side view of a detent in the blocked state,
- Fig. 8a:: is a partial side view of the control ring in a state with the carrier actuated, and
- Fig. 8b:: is a partial side view of the control ring with the backrest folded forward.

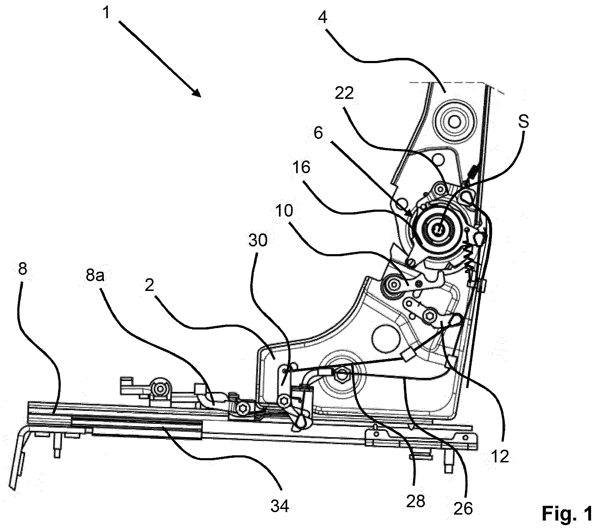

Figure 1 is a partial side view of a vehicle seat 1 according to the invention in a position for use. The position indications and direction indications used, such as, for example, front, rear, top and bottom, refer to a viewing direction of an occupant sitting in the vehicle seat 1 in the normal seating position, wherein the vehicle seat 1 is installed in the vehicle, is in a position for use which is suitable for transporting persons with an upright backrest 4 and is orientated as conventional in the travel direction. However, the vehicle seat 1 according to the invention can also be installed in a different orientation, for example, transversely relative to the travel direction.

The vehicle seat 1 has a seat member 2 and a backrest 4 which can be pivoted about a pivot axis S, at least one lockable fitting 6 for pivotably connecting the backrest 4 to the seat member 2, at least one rail pair 8 for longitudinally adjusting the vehicle seat 1 and a rail lock 8a for locking the at least one rail pair 8. The vehicle seat 1 can be moved into an easy-entry position which can be assumed for easier accessibility to a rear seat row and in which the vehicle seat 1 with respect to at least one position for use which is suitable for transporting persons is displaced by means of the at least one rail pair 8 into a front longitudinal position. In the easy-entry position, the backrest 4 is further pivoted forwards about the pivot axis S, in particular about a rotation angle in the range from 25° to 30°, preferably by precisely 27.5°. The backrest 4 is secured by means of a detent 10 in the pivoted-forward position. The detent 10 can be blocked by means of a blocking lever 12 in order to prevent release of the backrest 4 as long as the vehicle seat 1 is displaced into a longitudinal position which corresponds to the easy-entry position.

The vehicle seat 1 further has a flat floor function which serves to increase the loading floor. In this instance, the vehicle seat 1 can be moved into a flat floor position, in which the backrest 4 is pivoted forward to the maximum extent so that the backrest 4 rests where applicable in a planar manner on the seat member 2.

The vehicle seat 1 has a control ring 16 which can be carried by means of a carrier 22 which is arranged on the backrest 4 when the backrest 4 is moved into the easy-entry position. The control ring 16 is in this instance rotatably arranged coaxially with respect to the pivot axis S and consequently also in alignment with the fitting 6. The carrier 22 is arranged so as to be rotatably supported on a lateral portion of the backrest 4 and resiliently loaded in the direction of a position which can be brought into engagement with the control ring 16, in particular by means of a resilient element 24. The resilient element 24 is in this instance constructed as a tension spring.

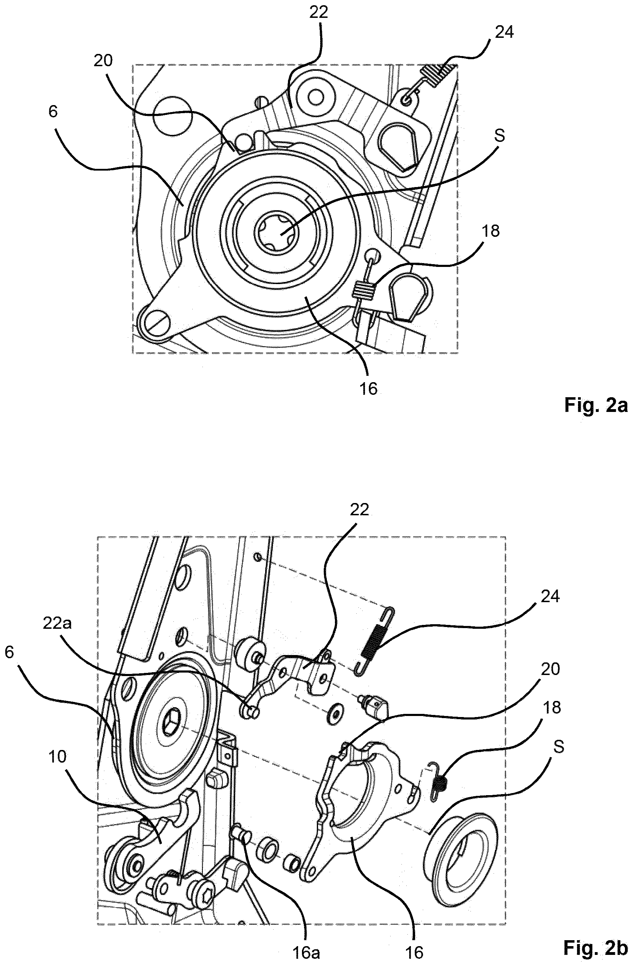

The respective regions of Figure 1 around the control ring 16, around an activation element 30 and around the blocking lever 12 are illustrated one after the other in the following Figures 2a, 3a and 4a as enlarged views, respectively. The additional Figures 2b, 3b and 4b each show a separate exploded view of various components from the corresponding Figures 2a, 3a and 4a, respectively.

According to the illustrations of Figures 2a and 2b, the control ring 16 has a receiving member 20 in which the carrier 22, in particular a pin 22a of the carrier 20, can partially engage in order to carry the control ring 16 when the backrest 4 is moved into the easy-entry position. Furthermore, the control ring 16 is connected to a first end of a first Bowden cable 26 whose second end cooperates with the rail lock 8a. The control ring 16 is pretensioned by means of a resilient element 18 in the direction of a basic position shown in Figure 2a. The resilient element 18 is in this instance constructed as a tension spring.

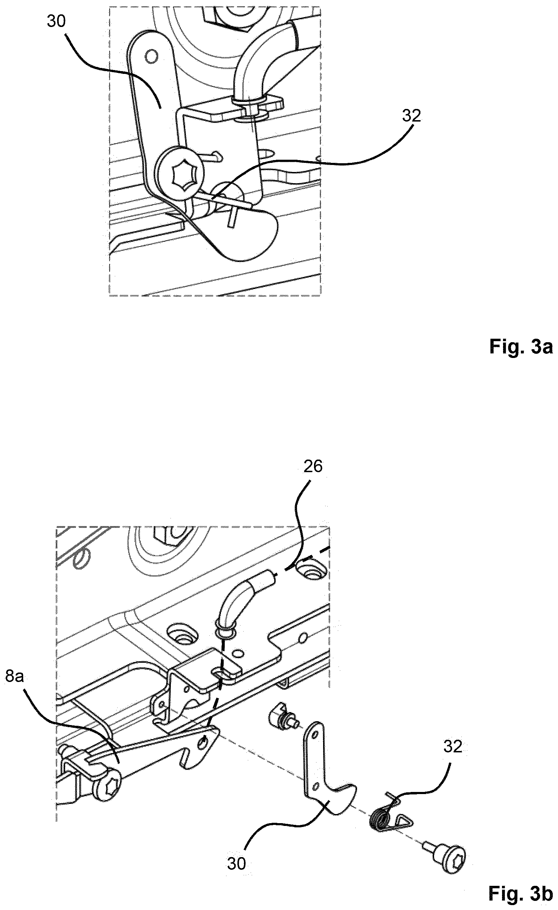

An activation element 30 is illustrated in detail in Figures 3a and 3b. The vehicle seat 1 has a corresponding activation element 30 which is arranged on the lateral portion of the seat member 2 or an upper rail of the rail pair 8. The activation element 30 is pretensioned by means of a resilient element 32, preferably in the direction of a non-activated position. The resilient element 32 is in this instance constructed as a leg spring.

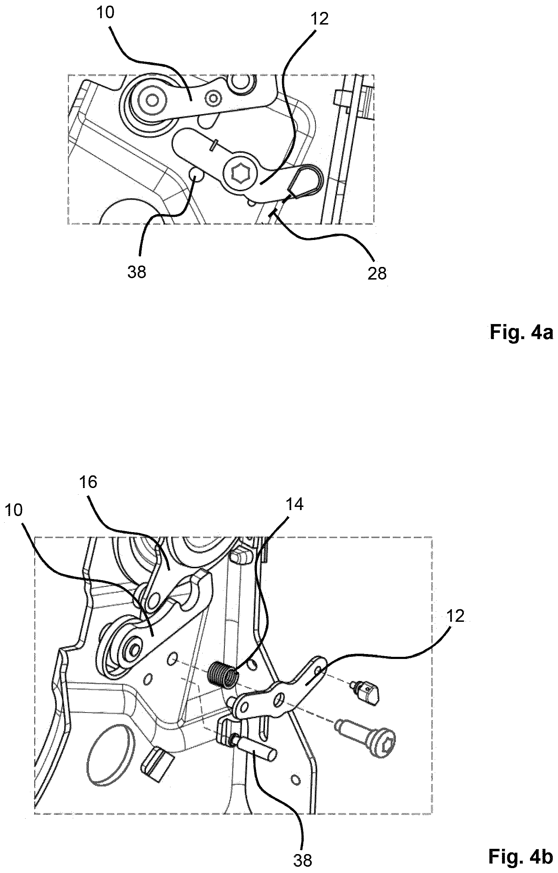

Figures 4a and 4b show the blocking lever 12 in detail. The blocking lever 12 is pretensioned by means of a resilient element 14 in the direction of a release position shown in Figure 4a. The resilient element 14 is constructed in this instance as a leg spring. The direction of the pretensioning corresponds according to the illustration of Figure 4a to a rotation of the blocking lever 12 in a counter-clockwise direction. The scope for movement of the blocking lever 12 may, for example, be limited by corresponding stop elements 38 or a guide. In the release position, the blocking lever 12 is in abutment with the stop element 38 in this case.

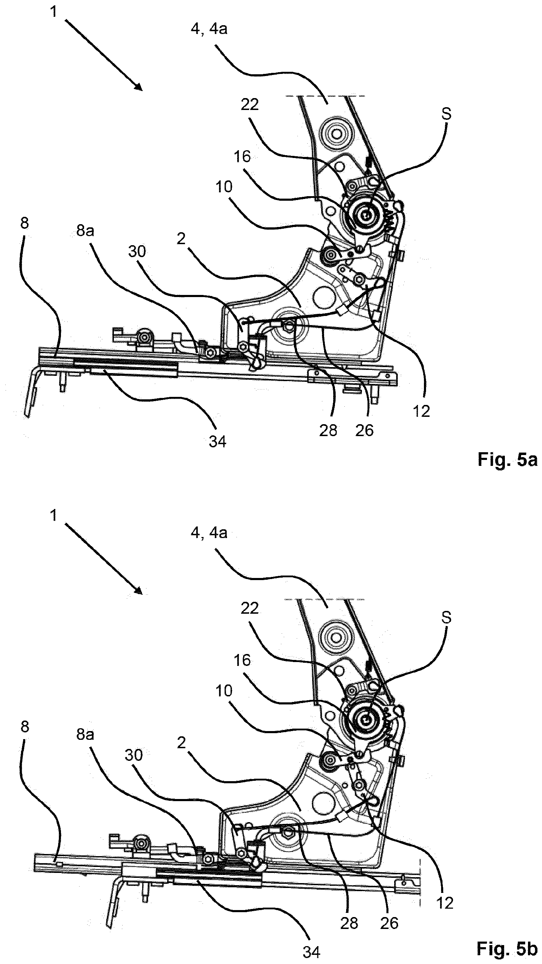

In Figure 5a, the vehicle seat 1 according to the invention is illustrated in a state with the backrest pivoted forward, which occurs while the easy-entry position of the vehicle seat 1 is assumed. Figure 5b shows the vehicle seat 1 according to the invention in the easy-entry position which, starting from the state shown in Figure 5a, is assumed by displacing the vehicle seat 1 forward.

The detent 10 is resiliently loaded in the direction of the engagement position illustrated. When the control ring 16 is rotated, a pin 16a which is arranged on the control ring 16 and which preferably protrudes laterally pivots about the pivot axis S and falls into a recess of the detent 10. When the backrest 4 is pivoted about the pivot axis S, in particular about a rotation angle in the range from 25° to 30°, preferably through precisely 27.5°, into the easy-entry position, as illustrated in Figures 5a and 5b, the pin 16a of the control ring 16 is in engagement with the detent 10.

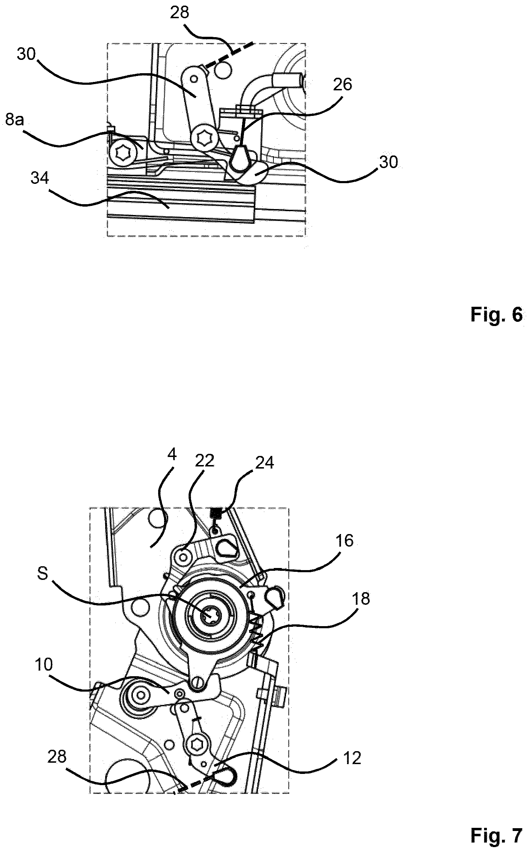

In Figure 6, the activation element 30 is illustrated in the activated state, that is to say, in abutment with, in particular supported on a control contour 34 which is arranged on the lower rail of the rail pair 8. The activation element 30 is operationally connected to the blocking lever 12 by means of a second Bowden cable 28.

The activation element 30 is configured in such a manner that a pivoting of the blocking lever 12 into a blocking position, which is shown in Figure 7 and in which the detent 10 is blocked, is produced when the activation element 30 moves into contact with a control contour 34 which is arranged in the region of a longitudinal position which corresponds to the easy-entry position and is pivoted by it, as shown in Figures 5b and 6.

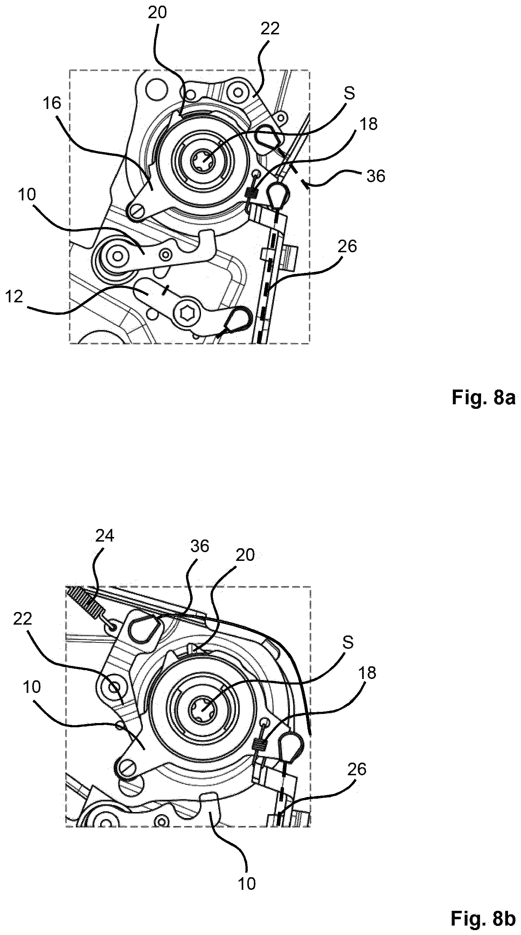

In Figure 8a, the vehicle seat 1 according to the invention is illustrated partially in a state during the transfer of the vehicle seat 1 into the flat floor position, in which state the carrier 22 is out of engagement with the control ring 16. Figure 8b shows the cutout of the vehicle seat 1 of Figure 8a with the backrest 4 folded forward in the flat-floor position.

The carrier 22 is operationally connected for direct actuation by means of a third Bowden cable 36 to a handle for remote actuation, which is not also illustrated for technical illustrative reasons. The carrier 22 can be moved by actuation by means of the handle for remote actuation into a position according to Figure 8a, in which the carrier 22 is out of engagement with the control ring 16, in particular the receiving member 20 of the control ring 16. The control ring 16, as illustrated in Figure 8b, in the event of a subsequent forward pivoting movement of the backrest 4, retains its angular position relative to the pivot axis S.

### List of reference numerals

- 1: Vehicle seat
- 2: Seat member
- 4: Backrest
- 6: Fitting
- 8: Rail pair
- 8a: Rail lock
- 10: Detent
- 12: Blocking lever
- 14: Resilient element
- 16: Control ring
- 16a: Pin
- 18: Resilient element
- 20: Receiving member
- 22: Carrier
- 22a: Pin
- 24: Resilient element
- 26: First Bowden cable
- 28: Second Bowden cable
- 30: Activation element
- 32: Resilient element
- 34: Control contour
- 36: Third Bowden cable
- 38: Stop element
- S: Pivot axis

## Claims

1. Vehicle seat (1), in particular a motor vehicle seat, having a seat member (2) and a backrest (4) which can be pivoted about a pivot axis (S), at least one lockable fitting (6) for pivotably connecting the backrest (4) to the seat member (2), at least one rail pair (8) for longitudinally adjusting the vehicle seat (1) and a rail lock (8a) for locking the at least one rail pair (8), wherein the vehicle seat (1) can be moved into an easy-entry position which can be assumed for easier accessibility to a rear seat row and in which the vehicle seat (1) with respect to at least one position for use which is suitable for transporting persons is displaced into a front longitudinal position by means of the at least one rail pair (8), the backrest (4) is pivoted forwards about the pivot axis (S) and the backrest (4) is secured in the pivoted-forward position by means of a detent (10),
**characterised in that**
the detent (10) can be blocked by means of a blocking lever (12) in order to prevent release of the backrest (4) as long as the vehicle seat (1) is displaced into a longitudinal position which corresponds to the easy-entry position.

2. Vehicle seat (1) according to Claim 1, wherein the detent (10) is resiliently loaded in the direction of a securing position.

3. Vehicle seat (1) according to either Claim 1 or Claim 2, wherein the vehicle seat (1) has a control ring (16) which, when the backrest (4) is moved into the easy-entry position, can also be carried by means of a carrier (22) which is arranged on the backrest (4).

4. Vehicle seat (1) according to Claim 3, wherein the control ring (16) moves into engagement with the detent (10) when the backrest (4) is pivoted into the easy-entry position.

5. Vehicle seat (1) according to either Claim 3 or Claim 4, wherein the control ring (16) is rotatably arranged coaxially relative to the pivot axis (S).

6. Vehicle seat (1) according to any one of Claims 3 to 5, wherein the carrier (22) is arranged so as to be rotatably supported on a lateral portion (4a) of the backrest (4).

7. Vehicle seat (1) according to any one of Claims 3 to 6, wherein the carrier (22) is resiliently loaded in the direction of a position which can be brought into engagement with the control ring (16).

8. Vehicle seat (1) according to any one of Claims 3 to 7, wherein the carrier (22) can be moved by actuation by means of a handle for remote unlocking into a position in which the carrier (22) is out of engagement with the control ring (16) and the control ring (16), when the backrest (4) is pivoted forward, maintains its angular position relative to the pivot axis (S).

9. Vehicle seat (1) according to any one of Claims 3 to 8, wherein the control ring (16) has a receiving member (20) by means of which the control ring (16) and the carrier (22), in particular a pin (22a) of the carrier (22), move into engagement.

10. Vehicle seat (1) according to any one of Claims 3 to 9, wherein the control ring (16) can be connected to a first end of a first Bowden cable (26), whose second end cooperates with a rail lock (8a).

11. Vehicle seat (1) according to any one of Claims 3 to 10, wherein the control ring (16) is pretensioned by means of a resilient element (18) in the direction of a basic position.

12. Vehicle seat (1) according to any one of Claims 1 to 11, wherein the vehicle seat (1) has an activation element (30) which is configured in such a manner that a pivoting of the blocking lever (12) into a blocking position in which the detent (10) is blocked is carried out when the activation element (30) moves into contact with a control contour (34) which is arranged in the region of a longitudinal position which corresponds to the easy-entry position.

13. Vehicle seat (1) according to Claim 12, wherein the activation element (30) is operationally connected to the blocking lever (12) by a second Bowden cable (28).

14. Vehicle seat (1) according to either Claim 12 or Claim 13, wherein the activation element (30) is pretensioned by means of a resilient element (32).

15. Vehicle seat (1) according to any one of Claims 1 to 14, wherein the blocking lever (12) is pretensioned in the direction of a release position by means of a resilient element (14).

## Patentansprüche

1. Fahrzeugsitz (1), insbesondere Kraftfahrzeugsitz, mit einem Sitzteil (2) und einer um eine Schwenkachse (S) schwenkbaren Lehne (4), wenigstens einem verriegelbaren Beschlag (6) zur schwenkbaren Anbindung der Lehne (4) an das Sitzteil (2), wenigstens einem Schienenpaar (8) zur Längsverstellung des Fahrzeugsitzes (1) und einer Schienenverriegelung (8a) zur Verriegelung des wenigstens einen Schienenpaars (8),
wobei der Fahrzeugsitz (1) in eine zur leichteren Zugänglichkeit einer hinteren Sitzreihe einnehmbare Easy-Entry-Stellung bringbar ist, in welcher der Fahrzeugsitz (1) gegenüber wenigstens einer zur Personenbeförderung geeigneten Gebrauchsstellung mittels des wenigstens einen Schienenpaars (8) in eine vordere Längsposition verschoben ist, die Lehne (4) um die Schwenkachse (S) nach vorne geschwenkt ist und die Lehne (4) mittels einer Klinke (10) in der nach vorne geschwenkten Lage arretiert ist,
**dadurch gekennzeichnet,**
**dass** die Klinke (10) mittels eines Sperrhebels (12) blockierbar ist, um ein Freigeben der Lehne (4) zu verhindern, solange der Fahrzeugsitz (1) in eine der Easy-Entry-Stellung entsprechende Längsposition verschoben ist.

2. Fahrzeugsitz (1) gemäß Anspruch 1, wobei die Klinke (10) in Richtung einer Arretierstellung federbelastet ist.

3. Fahrzeugsitz (1) gemäß einem der Ansprüche 1 oder 2, wobei der Fahrzeugsitz (1) einen Steuerring (16) aufweist, welcher beim Überführen der Lehne (4) in die Easy-Entry-Stellung, mittels eines an der Lehne (4) angeordneten Mitnehmers (22), mitführbar ist.

4. Fahrzeugsitz (1) gemäß Anspruch 3, wobei der Steuerring (16) mit der Klinke (10) in Eingriff gelangt, wenn die Lehne (4) in die Easy-Entry-Stellung verschwenkt ist.

5. Fahrzeugsitz (1) gemäß einem der Ansprüche 3 oder 4, wobei der Steuerring (16) koaxial zur Schwenkachse (S) drehbar angeordnet ist.

6. Fahrzeugsitz (1) gemäß einem der Ansprüche 3 bis 5, wobei der Mitnehmer (22) an einem Seitenteil (4a) der Lehne (4) drehbar gelagert angeordnet ist.

7. Fahrzeugsitz (1) gemäß einem der Ansprüche 3 bis 6, wobei der Mitnehmer (22) in Richtung einer mit dem Steuerring (16) in Eingriff bringbaren Stellung federbelastet ist.

8. Fahrzeugsitz (1) gemäß einem der Ansprüche 3 bis 7, wobei der Mitnehmer (22) durch eine Betätigung mittels einer Handhabe zur Fernentriegelung in eine Stellung bringbar ist, in welcher sich der Mitnehmer (22) außer Eingriff mit dem Steuerring (16) befindet und der Steuerring (16) beim Vorschwenken der Lehne (4) seine Winkellage relativ zur Schwenkachse (S) beibehält.

9. Fahrzeugsitz (1) gemäß einem der Ansprüche 3 bis 8, wobei der Steuerring (16) ein Aufnahmeteil (20) aufweist, mittels welchem der Steuerring (16) und der Mitnehmer (22), insbesondere ein Bolzen (22a) des Mitnehmers (22), in Eingriff gelangen.

10. Fahrzeugsitz (1) gemäß einem der Ansprüche 3 bis 9, wobei der Steuerring (16) mit einem ersten Ende eines ersten Bowdenzugs (26) verbindbar ist, dessen zweites Ende mit einer Schienenverriegelung (8a) zusammenwirkt.

11. Fahrzeugsitz (1) gemäß einem der Ansprüche 3 bis 10, wobei der Steuerring (16) mittels eines Federelements (18) in Richtung einer Grundstellung vorgespannt ist.

12. Fahrzeugsitz (1) gemäß einem der Ansprüche 1 bis 11, wobei der Fahrzeugsitz (1) ein Aktivierungselement (30) aufweist, welches derart eingerichtet ist, dass ein Verschwenken des Sperrhebels (12) in eine Blockierstellung, in welcher die Klinke (10) blockiert ist, erfolgt, wenn das Aktivierungselement (30) mit einer im Bereich einer der Easy-Entry-Stellung entsprechenden Längsposition angeordneten Steuerkontur (34) in Kontakt gelangt.

13. Fahrzeugsitz (1) gemäß Anspruch 12, wobei das Aktivierungselement (30) durch einen zweiten Bowdenzug (28) mit dem Sperrhebel (12) wirkverbunden ist.

14. Fahrzeugsitz (1) gemäß einem der Ansprüche 12 oder 13, wobei das Aktivierungselement (30) mittels eines Federelements (32) vorgespannt ist.

15. Fahrzeugsitz (1) gemäß einem der Ansprüche 1 bis 14, wobei der Sperrhebel (12) mittels eines Federelements (14) in Richtung einer Freigabestellung vorgespannt ist.

## Revendications

1. Siège de véhicule (1), en particulier siège de véhicule automobile, comprenant un organe de siège (2) et un dossier (4) qui peut être pivoté autour d'un axe de pivotement (S), au moins une ferrure verrouillable (6) pour connecter de manière pivotante le dossier (4) à l'organe de siège (2), au moins une paire de rails (8) pour ajuster longitudinalement le siège de véhicule (1) et un verrouillage de rail (8a) pour verrouiller l'au moins une paire de rails (8), le siège de véhicule (1) pouvant être déplacé dans une position facilitant l'accès qui peut être adoptée pour faciliter l'accès à une rangée de sièges arrière et dans laquelle le siège de véhicule (1) est déplacé, au moyen de l'au moins une paire de rails (8), dans une position longitudinale avant par rapport à au moins une position d'utilisation apte à transporter des personnes, le dossier (4) est pivoté vers l'avant autour de l'axe de pivotement (S) et le dossier (4) est fixé dans la position pivotée vers l'avant au moyen d'un cliquet (10),
**caractérisé en ce que**
le cliquet (10) peut être bloqué au moyen d'un levier de blocage (12) afin d'empêcher la libération du dossier (4) tant que le siège de véhicule (1) est déplacé dans une position longitudinale qui correspond à la position facilitant l'accès.

2. Siège de véhicule (1) selon la revendication 1, dans lequel le cliquet (10) est chargé élastiquement dans la direction d'une position de fixation.

3. Siège de véhicule (1) selon la revendication 1 ou 2, dans lequel le siège de véhicule (1) présente une couronne de commande (16) qui, lorsque le dossier (4) est déplacé dans la position facilitant l'accès, peut également être portée au moyen d'un support (22) qui est disposé sur le dossier (4).

4. Siège de véhicule (1) selon la revendication 3, dans lequel la couronne de commande (16) se déplace en prise avec le cliquet (10) lorsque le dossier (4) est pivoté dans la position facilitant l'accès.

5. Siège de véhicule (1) selon la revendication 3 ou 4, dans lequel la couronne de commande (16) est disposée de manière à pouvoir tourner coaxialement par rapport à l'axe de pivotement (S).

6. Siège de véhicule (1) selon l'une quelconque des revendications 3 à 5, dans lequel le support (22) est disposé de manière à être supporté de manière rotative sur une partie latérale (4a) du dossier (4) .

7. Siège de véhicule (1) selon l'une quelconque des revendications 3 à 6, dans lequel le support (22) est précontraint élastiquement dans la direction d'une position qui peut être amenée en prise avec la couronne de commande (16).

8. Siège de véhicule (1) selon l'une quelconque des revendications 3 à 7, dans lequel le support (22) peut être déplacé par actionnement au moyen d'une poignée pour le déverrouillage à distance dans une position dans laquelle le support (22) est désengagé de la couronne de commande (16) et la couronne de commande (16), lorsque le dossier (4) est pivoté vers l'avant, maintient sa position angulaire par rapport à l'axe de pivotement (S).

9. Siège de véhicule (1) selon l'une quelconque des revendications 3 à 8, dans lequel la couronne de commande (16) présente un organe de réception (20) au moyen duquel la couronne de commande (16) et le support (22), en particulier une goupille (22a) du support (22), se mettent en prise.

10. Siège de véhicule (1) selon l'une quelconque des revendications 3 à 9, dans lequel la couronne de commande (16) peut être raccordée à une première extrémité d'un premier câble Bowden (26) dont la deuxième extrémité coopère avec un verrouillage de rail (8a).

11. Siège de véhicule (1) selon l'une quelconque des revendications 3 à 10, dans lequel la couronne de commande (16) est précontrainte au moyen d'un élément élastique (18) dans la direction d'une position de base.

12. Siège de véhicule (1) selon l'une quelconque des revendications 1 à 11, dans lequel le siège de véhicule (1) présente un élément d'activation (30) qui est configuré de telle sorte qu'un pivotement du levier de blocage (12) dans une position de blocage dans laquelle le cliquet (10) est bloqué soit réalisé lorsque l'élément d'activation (30) se déplace jusqu'à venir en contact avec un contour de commande (34) qui est disposé dans la région d'une position longitudinale qui correspond à la position facilitant l'accès.

13. Siège de véhicule (1) selon la revendication 12, dans lequel l'élément d'activation (30) est relié fonctionnellement au levier de blocage (12) par un deuxième câble Bowden (28).

14. Siège de véhicule (1) selon la revendication 12 ou 13, dans lequel l'élément d'activation (30) est précontraint au moyen d'un élément élastique (32).

15. Siège de véhicule (1) selon l'une quelconque des revendications 1 à 14, dans lequel le levier de blocage (12) est précontraint dans la direction d'une position de libération au moyen d'un élément élastique (14).
